(19) Europäisches Patentamt
European Patent Office
Office européen des brevets

(11) **EP 1 394 534 B1**

(12) **EUROPÄISCHE PATENTSCHRIFT**

(45) Veröffentlichungstag und Bekanntmachung des Hinweises auf die Patenterteilung:
**21.10.2009 Patentblatt 2009/43**

(51) Int Cl.:
*G01N 27/06* (2006.01)   *G01N 33/48* (2006.01)
*G01N 33/487* (2006.01)   *G01N 27/10* (2006.01)

(21) Anmeldenummer: **03450187.4**

(22) Anmeldetag: **14.08.2003**

(54) **Durchflussmesszelle mit einer Vorrichtung zur Überprüfung der Positionierung und der Blasenfreiheit einer medizinischen Mikroprobe**

Flow measuring cell with an apparatus for checking positioning and freedom from bubbles of a medical microsample

Cellule d'écoulement avec un appareil pour vérifier le positionnement et l'absence de bulles dans des micro-échantillons médicaux

(84) Benannte Vertragsstaaten:
**AT BE BG CH CY CZ DE DK EE ES FI FR GB GR HU IE IT LI LU MC NL PT RO SE SI SK TR**

(30) Priorität: **23.08.2002 AT 12672002**

(43) Veröffentlichungstag der Anmeldung:
**03.03.2004 Patentblatt 2004/10**

(73) Patentinhaber: **F.HOFFMANN-LA ROCHE AG**
**4070 Basel (CH)**

(72) Erfinder:
  • **Kontschieder, Heinz**
    **8010 Graz (AT)**
  • **Huemer, Herfried**
    **8330 Feldbach (AT)**

  • **Hajnsek, Martin**
    **8010 Graz (AT)**

(74) Vertreter: **Babeluk, Michael et al**
    **Patentanwalt**
    **Mariahilfer Gürtel 39/17**
    **1150 Wien (AT)**

(56) Entgegenhaltungen:
    EP-A- 1 312 919          WO-A-99/32881
    US-A- 3 665 495          US-A- 3 676 321
    US-A- 3 916 301          US-A- 4 919 770
    US-A- 5 438 271          US-A- 5 763 795

  • PATENT ABSTRACTS OF JAPAN Bd. 0082, Nr. 54 (P-315), 21. November 1984 (1984-11-21) & JP 59 125052 A (NITSUKISOU KK), 19. Juli 1984 (1984-07-19)

**Beschreibung**

Die Erfindung betrifft einen Analysator mit einer Messzelle zur Aufnahme einer medizinischen Mikroprobe mit mehreren Einzelelektroden zur Messung eines Inhaltsstoffes der Mikroprobe, mit einer Gleichspannungsquelle zur Bereitstellung einer Messspannung, die im Wesentlichen eine Gleichspannung ist, mit einer Wechselspannungsquelle zur Bereitstellung einer Wechselspannung, sowie miteiner Vorrichtung zur Überprüfung der Position und der Blasenfreiheit der medizinischen Mikroprobe in der Messzelle mit Hilfe der Wechselspannung. Weiters betrifft die Erfindung ein Verfahren zur Überprüfung der Positionierung und der Blasenfreiheit einer medizinischen Mikroprobe in einer Durchflussmesszelle eines Analysators.

Grundsätzlich muss man bei der Messung medizinischer Proben zwischen Einmalsensoren und Durchflussmesszellen unterscheiden. Bei Einmalsensoren wird die Probe in den Sensor eingeführt und mit Messelektroden in Kontakt gebracht. Voraussetzung für die Durchführung einer exakten und störungsfreien Messung ist dabei die entsprechende Positionierung der Probe in der Messzelle. Es ist bekannt, diese Positionierung über spezielle Messkontakte durchzuführen, die mit einer Wechselspannung beaufschlagt werden, so dass es über eine Impedanzmessung möglich ist, ein Signal zu erhalten, das eine Aussage über die Position der Probe ermöglicht. Bedingt durch den räumlichen Abstand der Elektroden zur Durchführung der eigentlichen Messung und den Elektroden zur Probenpositionierung kann es dabei jedoch zu fehlerhaften Messergebnissen kommen.

Aus der WO 99/32881 ist eine Einmalmesszelle bekannt, bei der dieser Nachteil dadurch vermieden wird, dass eine Wechselspannung an die eigentlichen Messelektroden angelegt wird. Auf diese Weise ist es möglich, zunächst die exakte Positionierung der Probe zu überprüfen und danach die eigentliche Messung vorzunehmen bzw. die Probe zu verwerfen, sofern eine nicht ordnungsgemäße Positionierung festgestellt wird. Weiters sind beispielsweise aus der EP 0 846 947 A2 Durchflussmesszellen mit mehreren Elektrodenanordnungen bekannt, die geeignet sind, mehrere Messungen hintereinander oder eine kontinuierliche Messung durchzuführen und die Konzentration verschiedener Analyten in der Probe zu bestimmen. Die Bedingungen in solchen Durchflussmesszellen unterscheiden sich grundsätzlich von denen in Einmalmesszellen. So ist es beispielsweise nicht ausreichend, vor der Durchführung einer Messung die Probenpositionierung zu überprüfen, da sich diese naturgemäß während der Messung verändert. Ein zusätzliches Problem besteht darin, dass durch elektrochemische Vorgänge, die durch die Messspannung verursacht sind, eine Blasenbildung an einer Elektrode auftreten kann, die ebenfalls störend ist und das Messergebnis verfälscht.

Aufgabe der Erfindung ist es, einen Analysator mit einer Vorrichtung zur Überprüfung der Positionierung und der Blasenfreiheit einer medizinischen Mikroprobe in einer Durchflussmesszelle, bzw. ein entsprechendes Verfahren derart zu verbessern, dass eindeutige Messergebnisse in Durchflussmesszellen mit mehreren Elektrodengruppen möglich sind, wobei ein einfacher Aufbau gewährleistet sein soll.

Diese Aufgabe wird erfindungsgemäß dadurch gelöst, dass die Messzelle als Durchflussmesszelle ausgeführt ist und mehrere hintereinander angeordnete Elektrodenanordnungen mit jeweils mehreren Einzelelektroden aufweist, wobei die Einzelelektroden der jeweiligen Elektrodenanordnung für die direkte und gleichzeitige Einkopplung der Wechselspannung und der Messspannung ausgebildet sind, dass die Vorrichtung zur Überprüfung der Positionierung und der Blasenfreiheit der medizinischen Mikroprobe eine Schaltung zur Erzeugung der an die Einzelelektroden anzulegenden Spannungen umfasst, die einen Summationspunkt aufweist, an dem die Gleichspannung, die als Messspannung dient, mit der Wechselspannung überlagert ist, sowie dass die Vorrichtung zur Überprüfung der Positionierung und der Blasenfreiheit der medizinischen Mikroprobe weiters Mittel zur Auswertung des Wechselspannungsanteils aufweist, wobei der gemessene Wechselspannungsanteil bzw. die Impedanz ein Maß für die Position der Mikroprobe und deren Blasenfreiheit ist.

Dabei wird erfindungsgemäß über zwei Einzelelektroden zumindest einer Elektrodenanordnung eine Wechselspannung eingekoppelt und der gemessene Wechselstromanteil bzw. die Impedanz als Maß für die Probenposition und Blasenfreiheit der Mikroprobe im Bereich der zumindest einen Elektrodenanordnung herangezogen, wobei die Einkoppelung der Messspannung und der Wechselspannung gleichzeitig erfolgt.

Die Wechselspannung wird somit - beispielsweise zur Bestimmung der Impedanz bzw. des Leitwertes - über zwei bereits für die Messung eines Inhaltsstoffes der Probe vorhandene Einzelelektroden der Elektrodenariordnung eingekoppelt.

Die Vorteile des erfindungsgemäßen Analysators bzw. des erfindungsgemäßen Messverfahrens liegen auf der Hand:

- In der Messzelle müssen keine zusätzlichen Elektroden für die Einkopplung der Wechselspannung bzw. für die Impedanzmessung angebracht werden.

- Die Impedanzmessung kann direkt zur Detektion störender Luftblasen im Bereich der jeweiligen Elektrodenanordnung verwendet werden. Das Vorliegen von Luftblasen wird durch eine Änderung der Impedanz bzw. des Leitwerts angezeigt.

- Die Luftblasen können gezielt dort erkannt werden (beispielsweise anhaftend an einer Arbeitselektrode oder einer Gegenelektrode), wo sie störend auf das Messergebnis wirken würden, bzw. werden an Stellen der Messzelle (z.B. Wand der Messzelle) nicht erkannt, wo das Messergebnis nicht gestört wird.

- Die Qualität der Benetzung der einzelnen Elektroden der Elektrodenanordnung kann bewertet werden (beispielsweise bei der Glukose- oder der Laktatmessung).

- Mit Hilfe der Impedanzmessung kann auch die genaue Positionierung der Mikroprobe im Bereich jeder einzelnen Elektrodenanordnung in Probenkanälen mit mehreren Elektrodenanordnungen bestimmt werden und so die Probenmenge klein gehalten werden. Dabei wird erfindungsgemäß die Mikroprobe in der Durchflussmesszelle so lange weiter bewegt, bis sich ein vorgegebener Impedanzwert bzw. Leitwert einstellt, welcher anzeigt, dass die Mikroprobe exakt im Bereich der jeweiligen Elektrodenanordnung positioniert ist.

- Die Leitwertsmessung bzw. Impedanzmessung kann simultan zur Messung des Inhaltsstoffes der Mikroprobe durchgeführt werden.

Durch die Simultanmessung ergibt sich der Vorteil, dass eine während der Analytmessung auftretende Veränderung der Messprobe (z.B. Gasentwicklung an der Arbeitselektrode, pH-Änderung, etc.) über die simultane Leitfähigkeitsmessung genau zum Zeitpunkt der Analytmessung kontrolliert werden kann.

Ein besonderer Vorteil der Erfindung liegt darin, dass repetitive Messungen mit Mikroproben innerhalb kurzer Zykluszeiten mit hoher Präzision und Sicherheit durchgeführt werden können. Das Auftreten von Gasblasen kann auch während der Messung sofort erkannt und entsprechend berücksichtigt werden. Ein weiterer besonderer Vorteil im Vergleich zu Messungen mit Einmalsensoren liegt darin, dass für sehr reelle Messungen eine zeitaufwendige und umständliche Erneuerung der Messsensoren, die in vielen Fällen auch mit der zeitintensiven Kalibration des Sensors verbunden ist, entfallen kann.

Wesentlich an der Erfindung ist weiters, dass durch die Möglichkeit der Positionsbestimmung der Probe während der Messung ein wesentlich geringeres Probenvolumen erforderlich ist als bei Verfahren nach dem Stand der Technik, wobei dieser Vorteil mit der Anzahl der zu bestimmenden Analyten zunimmt.

Die erfindungsgemäße Vorrichtung eignet sich sowohl für Elektrodenanordnungen aus einer Arbeitselektrode und einer Referenzelektrode (Pseudo-Referenzelektrode), wobei die beiden Elektroden als elektrische Kontaktstelle für die Messung der Impedanz zwischen der Arbeitselektrode und der Referenzelektrode dienen, als auch für 3-Elektrodensysteme, bestehend aus einer Arbeitselektrode, einer Gegenelektrode und einer Referenzelektrode, wobei die Arbeitselektrode und die Gegenelektrode als elektrische Kontaktstellen für die Messung der Impedanz zwischen der Arbeitselektrode und der Gegenelektrode dienen.

Besondere Vorteile bei der Erkennung von Luftblasen ergeben sich, wenn in Strömungsrichtung der Mikroprobe vor und nach der Arbeitselektrode jeweils eine Gegenelektrode angeordnet ist, wobei die beiden Gegenelektroden elektrisch kurzgeschlossen sind.

Eine weitere vorteilhafte Ausführungsvariante sieht vor, dass die Gegenelektrode und die Arbeitselektrode in der Messzelle gegenüberliegend angeordnet sind.

Bei Messzellen, welche in Strömungsrichtung der Probe mehrere Elektrodenanordnungen hintereinander angeordnet haben, ist es von Vorteil, jeder Elektrodenanordnung eine separate Einrichtung zur Messung der Impedanz bzw. des Leitwertes zuzuordnen, um die Probenpositionierung bzw. die Erkennung von Luftblasen für jede Elektrodenanordnung separat durchführen zu können.

Die Erfindung wird im Folgenden anhand der beigefügten Figuren näher erläutert. Es zeigen

Fig. 1 eine teilweise Darstellung einer erfindungsgemäßen Vorrichtung zur Überprüfung der Positionierung und der Blasenfreiheit einer medizinischen Mikroprobe in einer Durchflussmesszelle eines Analysators in einer ersten Ausführungsvariante,

Fig. 2 eine zweite Ausführungsvariante der erfindungsgemäßen Vorrichtung, die

Fig. 3 und 4 unterschiedliche Elektrodenanordnungen bei der erfindungsgemäßen Vorrichtung,

Fig. 5 den Ablauf einer Probenmessung mit der erfindungsgemäßen Vorrichtung in drei unterschiedlichen Messstadien sowie die

Fig. 6 und 7 weitere Elektrodenanordnungen der erfindungsgemäßen Vorrichtung.

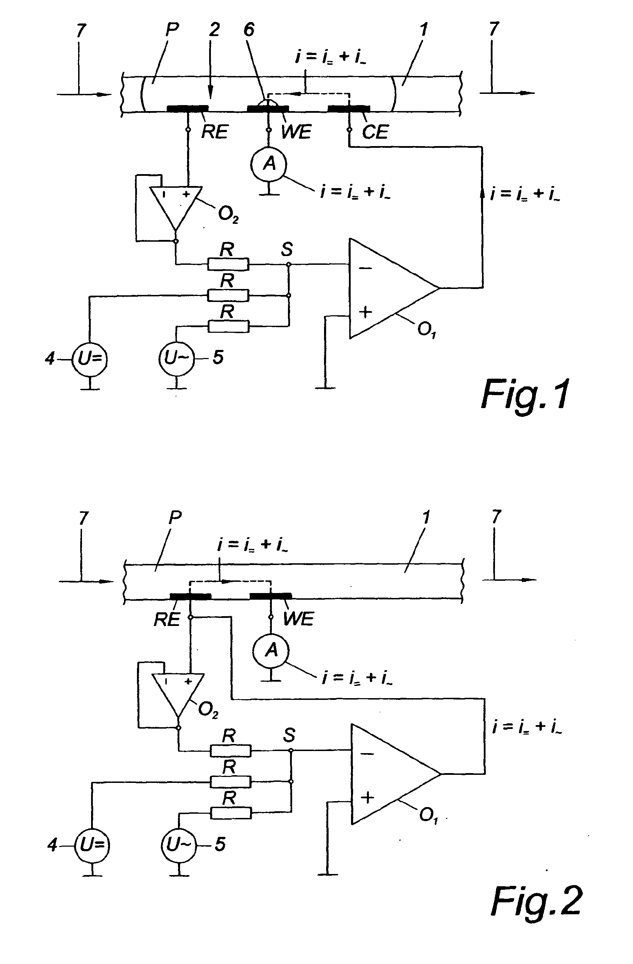

Die in Fig. 1 dargestellte erste Ausführungsvariante einer Vorrichtung zur Überprüfung der Positionierung und der Blasenfreiheit einer medizinischen Mikroprobe P in einer Durchflussmesszelle bzw. Messkapillare 1 einer nicht weiter dargestellten Analyseneinrichtung verwendet als Kontaktstellen, zwischen welchen die Impedanz bzw. der Leitwert der Mikroprobe gemessen wird, die Gegenelektrode CE und die Arbeitselektrode WE einer amperometrischen Elektrodenanordnung 2, beispielsweise zur Messung der Glukosekonzentration in einer Blutprobe. Weitere Elektrodenanordnungen sind der Elektrodenanordnung 2 nachgeschaltet, hier jedoch nicht dargestellt.

Verwirklicht wird ein potentiostatisches Schaltungskonzept nach dem Addierprinzip. Durch Vorschalten eines Addierers kann der Sollwert der Spannung an der Referenzelektrode RE durch Überlagerung mehrerer unterschiedlicher Eingangsspannungen gebildet werden. Der Operationsverstärker $O_1$ ändert seine Ausgangsspannung (welche der Spannung der Gegenelektrode CE entspricht) solange, bis die Stromsumme am Summationspunkt S (=invertierender Eingang des Operationsverstärkers $O_1$) gleich Null ist.

Der Operationsverstärker $O_2$ ist als Spannungsfolger (Impedanzwandler) geschaltet und dient zur hochohmigen Messung der Spannung an der Referenzelektrode RE, um diese nicht durch einen Stromfluss zu belasten. Am Ausgang von $O_2$ steht die Referenzelektrodenspannung aus einer niederohmigen Spannungsquelle zu Verfügung und dient über den Widerstand R zur Ankopplung an den Summationspunkt S vor dem Operationsverstärker $O_1$.

Im vorliegenden Beispiel wird für die Referenzelektrodenspannung $U_{RE}$ ein Gleichspannungsanteil U= (z.B. 350 mV) und ein Wechselspannungsanteil U~ (z.B. sinusförmige Wechselspannung mit 1 kHz und einem Amplitudenwert von 9 mV Effektivwert = 9 mV rms, **r**oot **m**ean **s**quare) überlagert, was durch Zuschaltung einer Gleichspannungsquelle 4 und einer Wechselspannungsquelle 5 realisiert wird. Beide Spannungsquellen sind über Widerstände R mit dem Summationspunkt S verbunden. Optimal zur Blasenerkennung und zur Positionsbestimmung sind Wechselspannungen in einem Frequenzbereich zwischen 1 kHz und 5 kHz.

Am Summationspunkt gilt:

$$i_1 + i_2 + i_3 = 0$$

$$i_3 = U_\sim/R$$

$$i_2 = U_=/R$$

$$i_1 = -(i_2 + i_3) = -1/R\,(U_= + U_\sim)$$

$$U_{RE} = i_1 * R = -(U_= + U_\sim)$$

Und somit:

$$U_{RE} = -(U_= + U_\sim)$$

Die Referenzelektrodenspannung setzt sich durch die Summe der Spannungen der einzelnen Spannungsquellen 4 und 5 zusammen. Durch die Verwendung des Impedanzwandlers $O_2$ wird die Referenzelektrode nicht belastet und arbeitet praktisch stromlos.
Der Stromflussweg des Sensorstromes erstreckt sich ausschließlich über den Ausgang von $O_1$, über die Gegenelektrode CE, die Arbeitselektrode WE, sowie über das Amperemeter A auf Ground.
Bei der Auswertung wird der Gleichspannungsanteil (enthält die Information der Analytkonzentration, z.B. Glukosekonzentration) und der Wechselspannungsanteil (enthält die Impedanzinformation) getrennt, wozu bekannte in Fig. 1 nicht weiter dargestellte Filterschaltungen verwendet werden (beispielsweise Auskopplung des Wechselspannungsanteils durch Bandpass-Filter, Auskopplung des Gleichspannungsanteils durch Tiefpass-Filter).
Mit der beschriebenen Vorrichtung kann einerseits die Mikroprobe P in der Messzelle 1 genau im Bereich der Elektrodenanordnung 2 positioniert werden (erst bei der richtigen Positionierung stellt sich ein vorbekannter Leitwert ein), wobei bei Abweichungen von diesem vorbekannten Wert, beispielsweise durch das Vorliegen einer Luftblase 6 im Bereich der Arbeitselektrode WE, eine Störung des Systems festgestellt und die eigentliche Messung des Inhaltsstoffes der Mikroprobe wiederholt werden kann.
In den einzelnen Ausführungsvarianten wird die Richtung der Probenführung in der Messzelle 1 durch Pfeile 7 angedeutet, wobei in Fließrichtung der Mikroprobe die Gegenelektroden bevorzugt zuletzt angeordnet ist und die Reihenfolge der Referenzelektrode und der Arbeitselektrode vom jeweiligen Anwendungsfall abhängt. Bei Einzelmessungen ist es von Vorteil wenn zuerst die Referenzelektrode RE jeder Elektrodenanordnung von der Mikroprobe benetzt wird. Bei kontinuierlich messenden Systemen, bei welchen auf eine kurze Totzeit Wert gelegt wird, ist es vorteilhaft, wenn an erster Stelle die Arbeitselektrode WE angeordnet ist.
Bei der Ausführungsvariante gemäß Fig. 2 ist in der Messzelle 1 eine amperometrische Elektrodenanordnung 2 bestehend aus einer Arbeitselektrode WE und einer Pseudo-Referenzelektrode RE vorgesehen. Das im Zusammenhang mit Fig. 1 beschriebene potentiostatische 3-Elektrodensystem kann in ein 2-Elektrodensystem übergeführt werden, wenn die während der Analytbestimmung auftretenden Sensorströme sehr klein sind (Größenordnung wenige Nano-Ampere).
Auf der elektronischen Schaltungsseite erfolgt dies durch Verbindung des Ausgangs des Operationsverstärkers $O_1$ mit dem nichtinvertierenden Eingang des Operationsverstärkers $O_2$. Da bei der 2-Elektroden-Anordnung ein (geringer) Stromfluss durch die Referenzelektrode RE auftritt spricht man nicht mehr von einer Referenzelektrode, sondern von einer sogenannten Pseudo-Referenzelektrode.
Ein durch den Sensorstrom bedingter Spannungsabfall am Elektrolytwiderstand bzw. am Elektrodenübergangswiderstand der Pseudo-RE bleibt unkompensiert und äußert sich bei höheren Sensorströmen durch Einbruch des linearen Messbereichs.

Die Funktionsweise der Schaltung liegt darin, dass jede Regelaktivität eliminiert ist und dass die Summe der Spannungen aus der Gleichspannungsquelle 4 und der Wechselspannungsquelle 5 am Anschluss der Pseudo-RE zu liegen kommt, sodass der Sensor-Stromflussweg von der Referenzelektrode RE über die Arbeitselektrode WE und das Amperemeter A auf Ground erfolgt. Bezüglich Trennung von Gleich- und Wechselspannungsanteil gilt dasselbe wie bei der Schaltungsbeschreibung zu Fig.1.

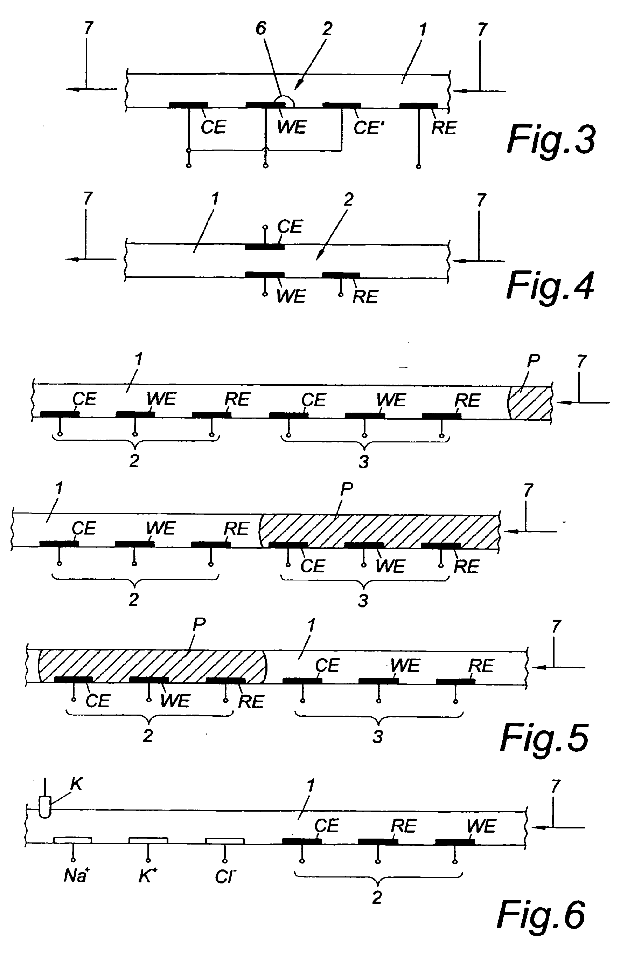

Falls sich eine Luftblase 6 an dem der Referenzelektrode RE zugewandten Rand der Arbeitselektrode WE anlagert, ist es - wie in Fig. 3 dargestellt - von Vorteil eine weitere Gegenelektrode CE' zwischen Arbeitselektrode WE und Referenzelektrode RE anzubringen und die beiden Gegenelektroden CE, CE' elektrisch kurzzuschließen, um eine störende Luftblase in diesem Bereich besser detektieren zu können.

Vorteile ergeben sich weiters bei einer Anordnung der Einzelelektroden gemäß Fig. 4, bei welcher die Arbeitselektrode WE und die Gegenelektrode CE einander gegenüberliegend in der Messzelle bzw. Messkapillare 1 angeordnet sind. Die Referenzelektrode RE kann entweder - wie dargestellt - auf der Seite der Arbeitselektrode WE oder auch auf der Seite der Gegenelektrode CE angeordnet sein.

In Fig. 5 wird in mehreren Messstadien die exakte Positionierung einer Mikroprobe P in einer Messzelle 1 dargestellt, wobei in der Messzelle eine Elektrodenanordnung 2, beispielsweise zur Glukosemessung, und eine Elektrodenanordnung 3, beispielsweise zur Laktatmessung, vorgesehen sind. Aus diesem Beispiel ist ersichtlich, dass auch die exakte Positionierung einer Mikroprobe im Bereich jeder der beiden Elektrodenanordnungen 2 und 3 möglich ist, wobei nicht die gesamte Messkammer mit Probenflüssigkeit gefüllt sein muss. Es besteht somit die Möglichkeit nur jene Probenmenge in die Messzelle einzusaugen, die für die Benetzung des 3-Elektrodensystems benötigt wird.

Grundsätzlich kann die beschriebene Methode zur Probenpositionierung und Blasenerkennung auch bei potentiometrischen Elektrodensystemen angewendet werden. Wie aus Fig. 6 ersichtlich, können neben den amperometrischen Elektrodenanordnungen 2 bzw. 3 in der selben Messzelle 1 auch potentiometrische Elektroden zur Messung von beispielsweise Na$^+$, K$^+$ und Cl vorgesehen sein.

Die Referenzelektrode RE ist in der Elektrodenanordnung 2 stromabwärts der Arbeitselektrode WE angeordnet.

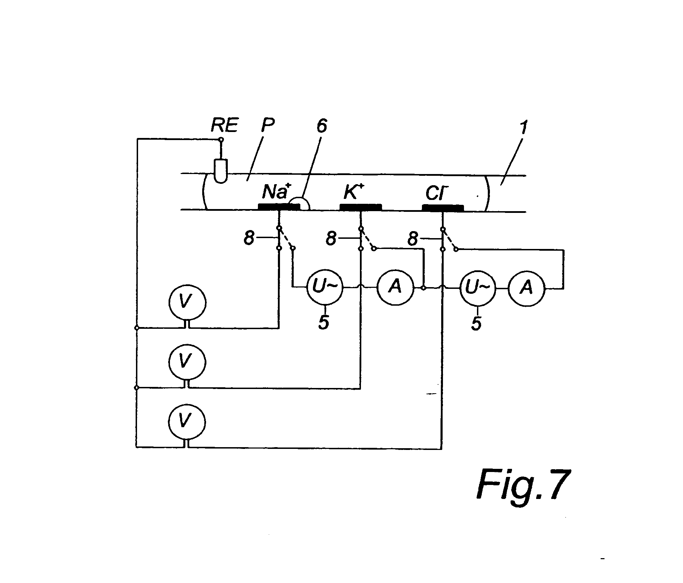

Fig. 7 zeigt dazu beispielhaft eine Schaltanordnung, bei der mittels Umschalter 8 zwischen der Analytbestimmung und der Blasendetektion bzw. Probenpositionierung umgeschaltet werden kann. Je nach Schalterstellung erfolgt die Impedanzmessung oder die Analytbestimmung. Da potentiometrische Elektroden sehr hochohmig sind und die Nernst-Gleichung die Elektrodenpotentiale für die stromlose Elektrode beschreibt, würde jede Strombelastung zu erheblichen Auslenkungen aus dem Potential-Gleichgewichtszustand und somit zu Störungen während der Analytbestimmung führen. Aus diesem Grund ist es vorteilhaft, zwischen beiden Messungen umzuschalten. Dies könnte auch mit schnellen, elektronischen Schaltern erfolgen.

Weiters kann mit der erfindungsgemäßen Vorrichtung auch die Impedanz einer in das Gewebe eines Patienten einbringbaren Trägerflüssigkeit (Perfusionsflüssigkeit) nach deren Äquilibrierung mit der Gewebeflüssigkeit gemessen und der Impedanzwert zur Berechnung des Anreicherungs- oder Vermischungsgrades herangezogen werden.

Die Änderung der Inhaltsstoffe in der Trägerflüssigkeit kann durch eine Messung der Impedanz bzw. des Leitwertes festgestellt werden. Derartige μ-Perfusionssysteme sind beispielsweise in der US-A 5,097,834 beschrieben. Bei der μ-Perfusionsmethode wird ein 2-lumiger dünner Katheter verwendet, dessen Außenmantel gelocht ist. Eine ionenfreie Perfusionslösung wird durch das Innenlumen an die Katheterspitze gepumpt, dort umgelenkt und über das Außenlumen abgesaugt. Durch die Löcher am Außenmantel entsteht ein Austausch der Flüssigkeiten (Diffusion, Konvektion); Gewebeflüssigkeit bzw. interstitielle Flüssigkeit und deren Substanzen gelangen in den Perfusionsstrom, der an den Katheter-Ausgang und anschließend zum Sensor geführt wird. Der Anreicherungsgrad oder Vermischungsgrad mit Ionen aus dem Interstitium kann mit Hilfe einer Leitfähigkeitsmessung festgestellt werden, da die Leitfähigkeit der ionenfreien Flüssigkeit und die Leitfähigkeit der interstitiellen Flüssigkeit bekannt sind. Damit ist eine Berechnung der Recovery-Rate möglich.

Schließlich kann die Vorrichtung auch zur Messung der Impedanz eines Dialysats nach der Dialyse herangezogen werden und der Impedanzwert zur Berechnung der Recovery-Rate verwendet werden.

Die μ-Dialysemethode ist sehr ähnlich zur oben beschriebenen μ-Perfusionsmethode, jedoch wird anstelle eines gelochten Katheters eine Dialysemembran als Außenmantel des Katheters verwendet. Diese Membrane haben einen MW-Cut-Off von ca. 20.000 Dalton, d.h. für niedermolekulare Substanzen wie Glukose, Elektrolyte ist diese Membran durchlässig, durch Diffusion wird der Trägerstrom mit diesen niedermolekularen Substanzen angereichert. Durch eine Leitfähigkeitsmessung im nachgeschalteten Sensor kann die Recovery-Rate ganz analog zum obigen Beispiel bestimmt und kontrolliert werden.

**Patentansprüche**

1.  Analysator mit
    einer Messzelle (1) zur Aufnahme einer medizinischen Mikroprobe (P) mit mehreren Einzelelektroden (WE, RE, CE) zur Messung eines Inhaltsstoffes der Mikroprobe (P),

einer Gleichspannungsquelle (4) zur Bereitstellung einer Messspannung, die im Wesentlichen eine Gleichspannung ist,

einer Wechselspannungsquelle (5) zur Bereitstellung einer Wechselspannung, sowie

einer Vorrichtung zur Überprüfung der Position und der Blasenfreiheit der medizinischen Mikroprobe (P) in der Messzelle (1) mit Hilfe der Wechselspannung, **dadurch gekennzeichnet, dass**

die Messzelle (1) als Durchflussmesszelle ausgeführt ist und mehrere hintereinander angeordnete Elektrodenanordnungen (2, 3) mit jeweils mehreren Einzelelektroden (WE, RE, CE) aufweist, wobei die Einzelelektroden (WE, RE, CE) der jeweiligen Elektrodenanordnung (2, 3) für die direkte und gleichzeitige Einkopplung der Wechselspannung und der Messspannung ausgebildet sind, dass

die Vorrichtung zur Überprüfung der Positionierung und der Blasenfreiheit der medizinischen Mikroprobe (P) eine Schaltung zur Erzeugung der an die Einzelelektroden (WE, RE, CE) anzulegenden Spannungen umfasst, die einen Summationspunkt (S) aufweist, an dem die Gleichspannung, die als Messspannung dient, mit der Wechselspannung überlagert ist, sowie dass

die Vorrichtung zur Überprüfung der Positionierung und der Blasenfreiheit der medizinischen Mikroprobe (P) Mittel zur Auswertung des Wechselspannungsanteils aufweist, wobei der gemessene Wechselspannungsanteil bzw. die Impedanz ein Maß für die Position der Mikroprobe (P) und deren Blasenfreiheit ist.

2. Analysator nach Anspruch 1, **dadurch gekennzeichnet, dass** eine Elektrodenanordnung aus einer Arbeitselektrode (WE) und einer Referenzelektrode (RE) besteht, wobei die beiden Elektroden (WE, RE) als elektrische Kontaktstellen für die Messung der Impedanz zwischen der Arbeitselektrode (WE) und der Referenzelektrode (RE) dienen.

3. Analysator nach Anspruch 1, **dadurch gekennzeichnet, dass** eine Elektrodenanordnung aus einer Arbeitselektrode (WE), einer Gegenelektrode (CE) und einer Referenzelektrode (RE) besteht, wobei die Arbeitselektrode (WE) und die Gegenelektrode (CE) als elektrische Kontaktstellen für die Messung der Impedanz zwischen der Arbeitselektrode (WE) und der Gegenelektrode (CE) dienen.

4. Analysator nach Anspruch 3, **dadurch gekennzeichnet, dass** bei kontinuierlich messenden Systemen in Strömungsrichtung der Mikroprobe (P) die einzelnen Elektroden in der Reihenfolge Arbeitselektrode (WE), Referenzelektrode (RE) und Gegenelektrode (CE) angeordnet sind.

5. Analysator nach Anspruch 3, **dadurch gekenn-**

**zeichnet, dass** in Strömungsrichtung der Mikroprobe (P) vor und nach der Arbeitselektrode (WE) jeweils eine Gegenelektrode (CE, CE') angeordnet ist, wobei die beiden Gegenelektroden (CE, CE') elektrisch kurzgeschlossen sind.

6. Analysator nach Anspruch 3, **dadurch gekennzeichnet, dass** die Gegenelektrode (CE) und die Arbeitselektrode (WE) in der Messzelle (1) gegenüberliegend angeordnet sind.

7. Analysator nach Anspruch 1, **dadurch gekennzeichnet, dass** der Summationspunkt (S) mit dem invertierenden Eingang eines Operationsverstärkers $O_1$ verbunden ist.

8. Analysator nach einem der Ansprüche 1 bis 7, **dadurch gekennzeichnet, dass** jeder Elektrodenanordnung (2, 3) eine Einrichtung zur Messung der Impedanz zugeordnet ist, die als Schaltung zur Überlagerung einer Gleichspannung mit einer Wechselspannung ausgebildet ist.

9. Verfahren zur Überprüfung der Positionierung und der Blasenfreiheit einer medizinischen Mikroprobe (P), welche in die Durchflussmesszelle (1) eines Analysators eingebracht wird und über mehrere Elektrodenanordnungen (2, 3) hinwegbewegt wird, die jeweils mehrere Einzelelektroden (WE, RE, CE) zur Messung eines Inhaltsstoffes der Mikroprobe (P) mit Hilfe einer Messspannung aufweisen, die im Wesentlichen eine Gleichspannung ist, **dadurch gekennzeichnet, dass** über zwei Einzelelektroden (WE, RE, CE) zumindest einer Elektrodenanordnung (2, 3) eine Wechselspannung eingekoppelt wird und der gemessene Wechselstromanteil bzw. die Impedanz als Maß für die Probenposition und Blasenfreiheit der Mikroprobe (P) im Bereich der zumindest einen Elektrodenanordnung (2, 3) herangezogen wird, wobei die Einkoppelung der Messspannung und der Wechselspannung gleichzeitig erfolgt.

10. Verfahren nach Anspruch 9, **dadurch gekennzeichnet, dass** die Mikroprobe (P) in der Durchflussmesszelle (1) so lange weiter bewegt wird, bis sich ein vorgegebener Impedanzwert bzw. Leitwert einstellt, welcher anzeigt, dass die Mikroprobe (P) exakt im Bereich der jeweiligen Elektrodenanordnung (2, 3) positioniert ist.

11. Verfahren nach Anspruch 9 oder 10, **dadurch gekennzeichnet, dass** im Bereich jeder Elektrodenanordnung (2, 3) die Probenposition und Blasenfreiheit der Mikroprobe (P) bestimmt wird.

**Claims**

1. An analyzer comprising
   a measuring cell (1) for receiving a medical microsample (P) with a plurality of single electrodes (WE, RE, CE) for measuring a substance contained in said microsample (P), and
   a DC voltage source (4) providing a measuring voltage, which essentially is a DC voltage, and
   an AC voltage source (5) providing an AC voltage, and
   a device for monitoring by means of the AC voltage the sample position and the absence of bubbles in the medical microsample (P) placed in the measuring cell (1),
   **characterised in that**
   the measuring cell (1) is a flow-through cell and contains a plurality of electrode arrangements (2, 3) one behind the other, each having a number of single electrodes (WE, RE, CE), the single electrodes (WE, RE, CE) of the respective electrode arrangement (2, 3) being configured for direct and simultaneous input of the AC voltage and the measuring voltage, and that
   the device for monitoring the sample position and the absence of bubbles in the medical microsample (P) comprises a circuit for generating the voltages to be applied at the single electrodes (WE, RE, CE), which circuit has a summation point (S) at which the AC voltage is superimposed on the DC voltage acting as measuring voltage, and that
   the device for monitoring the sample position and the absence of bubbles in the medical microsample (P) comprises means for evaluating the AC component, the measured AC component or the impedance being a measure for the sample position and the absence of bubbles in the microsample (P).

2. Analyzer according to claim 1, **characterised in that** an electrode arrangement consists of a working electrode (WE) and a reference electrode (RE), the two electrodes (WE, RE) serving as electrical contact points for measuring the impedance between the working electrode (WE) and the reference electrode (RE).

3. Analyzer according to claim 1, **characterised in that** an electrode arrangement consists of a working electrode (WE), a counter electrode (CE) and a reference electrode (RE), the working electrode (WE) and the counter electrode (CE) serving as electrical contact points for measuring the impedance between the working electrode (WE) and the counter electrode (CE).

4. Analyzer according to claim 3, **characterised in that** in systems for continuous measurement the individual electrodes are deployed in the following sequence: working electrode (WE), reference electrode (RE), counter electrode (CE), as seen in the flow direction of the microsample (P).

5. Analyzer according to claim 3, **characterised in that** a counter electrode (CE, CE') each is provided in front of and behind the working electrode (WE), as seen in flow direction of the microsample (P), the two counter electrodes (CE, CE') being electrically short-circuited.

6. Analyzer according to claim 3, **characterised in that** the counter electrode (CE) and the working electrode (WE) are positioned in the measuring cell so as to face each other.

7. Analyzer according to claim 1, **characterised in that** the summation point (S) is connnected to the inverting input terminal of an operational amplifier $O_1$.

8. Analyzer according to any of claims 1 to 7, **characterised in that** each electrode arrangement (2, 3) is provided with a device for impedance measurement, which is designed as a circuit for superimposing an AC voltage on a DC voltage.

9. Method for monitoring the sample position and the absence of bubbles in a medical microsample (P), which is introduced into the flow-through measuring cell (1) of an analyzer and moved along a plurality of electrode arrangements (2, 3), each of which consists of a number of single electrodes (WE, RE, CE) for measuring a substance contained in the microsample (P) by means of a measuring voltage, essentially a DC voltage, **characterised in that** an AC voltage is applied via two single electrodes (WE, RE, CE) of at least one electrode arrangement, and the measured AC component or the impedance is used as a measure for the sample position and the absence of bubbles in the microsample (P) in the area of the at least one electrode arrangement (2, 3), the measurement voltage and the AC voltage being applied simultaneously.

10. Method according to claim 9, **characterised in that** the microsample (P) is moved along in the flow-through measuring cell (1) until a predefined impedance or admittance value is measured, which indicates that the microsample (P) is precisely positioned in the area of the relevant electrode arrangement (2, 3).

11. Method according to claim 9 or 10, **characterised in that** the sample position and the absence of bubbles in the microsample (P) is determined in the area of each electrode arrangement (2, 3).

**Revendications**

1. Analyseur comprenant
une cellule de mesure (1) pour le logement d'un microéchantillon (P) médical avec plusieurs électrodes individuelles (WE, RE, CE) pour la mesure d'un ingrédient du microéchantillon (P),
une source de tension continue (4) pour la mise à disposition d'une tension de mesure, qui est essentiellement une tension continue,
une source de tension alternative (5) pour la mise à disposition d'une tension alternative, et
un dispositif pour le contrôle de la position et de l'absence de bulles du microéchantillon (P) médical dans la cellule de mesure (1) à l'aide de la tension alternative,
**caractérisé en ce que**
la cellule de mesure (1) est réalisée sous forme de cellule de mesure de flux présente plusieurs agencements d'électrodes (2, 3) disposés les uns derrière les autres et comprenant chacun plusieurs électrodes individuelles (WE, RE, CE), les électrodes individuelles (WE, RE, CE) de l'agencement d'électrodes (2, 3) respectif étant réalisées pour l'injection directe et simultanée de la tension alternative à l'aide et de la tension de mesure, **en ce que**
le dispositif pour le contrôle du positionnement et de l'absence de bulles du microéchantillon (P) médical comporte un circuit pour générer les tensions à appliquer sur les électrodes individuelles (WE, RE, CE), qui présente un point de cumul (S) sur lequel la tension continue, qui sert de tension de mesure, est superposée à la tension alternative, et **en ce que**
le dispositif pour le contrôle du positionnement et de l'absence de bulles du microéchantillon (P) médical présente des moyens pour l'analyse de la fraction de tension alternative, la fraction mesurée de tension alternative respectivement l'impédance étant une grandeur pour la position du microéchantillon (P) et son absence de bulles.

2. Analyseur selon la revendication 1, **caractérisé en ce qu'**un agencement d'électrodes comprend une électrode de travail (WE) et une électrode de référence (RE), les deux électrodes (WE, RE) servant de points de contact électrique pour la mesure de l'impédance entre l'électrode de travail (WE) et l'électrode de référence (RE).

3. Analyseur selon la revendication 1, **caractérisé en ce qu'**un agencement d'électrodes comprend une électrode de travail (WE), une contre-électrode (CE) et une électrode de référence (RE), l'électrode de travail (WE) et la contre-électrode (CE) servant de points de contact électrique pour la mesure de l'impédance entre l'électrode de travail (WE) et la contre-électrode (CE).

4. Analyseur selon la revendication 3, **caractérisé en ce que**, dans le cas de systèmes mesurant de façon continue dans le sens d'écoulement du microéchantillon (P), les électrodes individuelles sont disposées dans l'ordre de succession électrode de travail (WE), électrode de référence (RE) et contre-électrode (CE).

5. Analyseur selon la revendication 3, **caractérisé en ce que**, vu dans le sens d'écoulement du microéchantillon (P), une contre-électrode (CE, CE') est disposée respectivement avant et après l'électrode de travail (WE), les deux contre-électrodes (CE, CE') étant court-circuitées électriquement.

6. Analyseur selon la revendication 3, **caractérisé en ce que** la contre-électrode (C) et l'électrode de travail (WE) sont disposées l'une en face de l'autre dans la cellule de mesure (1).

7. Analyseur selon la revendication 1, **caractérisé en ce que** le point de cumul (S) est relié à l'entrée inverseuse d'un amplificateur opérationnel ($O_1$).

8. Analyseur selon l'une quelconque des revendications 1 à 7, **caractérisé en ce qu'**un dispositif pour la mesure de l'impédance, qui est réalisé sous forme de circuit pour la superposition d'une tension continue avec une tension alternative, est attribué à chaque agencement d'électrodes (2, 3).

9. Procédé pour le contrôle du positionnement et de l'absence de bulles d'un microéchantillon (P) médical, qui est introduit dans la cellule de mesure de flux (1) d'un analyseur et est déplacé sur plusieurs agencements d'électrodes (2, 3), qui comportent chacun plusieurs électrodes individuelles (WE, RE, CE) pour la mesure d'un ingrédient du microéchantillon (P) à l'aide d'une tension de mesure, qui est essentiellement une tension continue, **caractérisé en ce qu'**une tension alternative est injectée au moyen de deux électrodes individuelles (WE, RE, CE) d'au moins un agencement d'électrodes (2, 3) et la fraction mesurée de courant alternatif respectivement l'impédance est utilisée comme grandeur pour la position d'échantillon et l'absence de bulles du microéchantillon (P) médical dans la zone du au moins un agencement d'électrodes (2, 3), l'injection de la tension de mesure et l'injection de la tension alternative s'effectuant simultanément.

10. Procédé selon la revendication 9, **caractérisé en ce que** le microéchantillon (P) est déplacé dans la cellule de mesure de flux (1) jusqu'à ce qu'une valeur d'impédance respectivement une valeur de conductance prédéfinie s'établisse, laquelle indique que le microéchantillon (P) est positionné exactement dans la zone de l'agencement d'électrodes (2, 3) respectif.

**11.** Procédé selon la revendication 9 ou 10, **caractérisé en ce que** la position d'échantillon et l'absence de bulles du microéchantillon (P) sont déterminées dans la zone de chaque agencement d'électrodes (2, 3).

Fig.1

Fig.2

*Fig.3*

*Fig.4*

*Fig.5*

*Fig.6*

Fig.7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9932881 A
- EP 0846947 A2

- US 5097834 A